Europäisches Patentamt

European Patent Office

Office européen des brevets

(19)

(11) **EP 0 484 935 B1**

(12) **EUROPÄISCHE PATENTSCHRIFT**

(45) Veröffentlichungstag und Bekanntmachung des Hinweises auf die Patenterteilung:
**15.01.1997 Patentblatt 1997/03**

(51) Int Cl.$^6$: **G06K 7/10**

(21) Anmeldenummer: **91118979.3**

(22) Anmeldetag: **07.11.1991**

(54) **Verfahren und Vorrichtung zum Lesen und Identifizieren der Information einer Zeichenvorlage, insbesondere eines Barcodes, innerhalb eines zwei- oder drei-dimensionalen Feldes mittels einer Video-Kamera, die ein binäres Videosignal des Bildes zu erzeugen imstande ist**

Method and device for reading and identifying information represented by signs, in particular bar codes, in a two- or three-dimensional field using a video camera which is able te generate a binary videosignal of the image

Méthode et dispositif pour lire et identifier l'information réprésentée par des signes, en particulier un code à barres, dans un champs deux-/ou trois-dimensionnel à l'aide d'une caméra vidéo qui est capable de générer un signal vidéo numérique de l'image

(84) Benannte Vertragsstaaten:
**CH DE ES FR GB IT LI SE**

(30) Priorität: **07.11.1990 DE 4035396**

(43) Veröffentlichungstag der Anmeldung:
**13.05.1992 Patentblatt 1992/20**

(73) Patentinhaber: **F & O ELECTRONIC SYSTEMS GmbH**
**D-69239 Neckarsteinach (DE)**

(72) Erfinder:
• **Ihlefeld, Joachim, Dr.**
**O-8060 Dresden (DE)**
• **Gruber, Gerold, Dipl.-Ing.**
**O-8038 Dresden (DE)**

(74) Vertreter: **Mierswa, Klaus, Dipl.-Ing.**
**Friedrichstrasse 171**
**68199 Mannheim (DE)**

(56) Entgegenhaltungen:
**EP-A- 0 063 243          EP-A- 0 081 316**
**DE-A- 3 203 897          US-A- 4 000 397**

**Beschreibung**

Technisches Gebiet:

Die Erfindung betrifft ein Verfahren zum Lesen und Identifizieren der Information eines Bildes, insbesondere Barcode, innerhalb eines zwei- oder dreidimensionalen Feldes mittels einer Videokamera, die ein binäres Videosignal des Bildes erzeugt gemäß dem Oberbegriff des Anspruchs 1; ebenso betrifft die Erfindung eine Vorrichtung zur Durchführung des Verfahrens.

Stand der Technik:

Es sind Verfahren zum Lesen und Identifizieren von Bildinformationen einschließlich von Barcodes und Bildinformations-Erkennungssysteme zur Durchführung der Verfahren bekannt. Derartige Bildinformations-Erkennungssysteme können einen hin- und hergehenden Laserstrahl und logische Schaltungen bzw. Softwareprogramme aufweisen, mittels denen die auf die Artikel aufgedruckten Barcodes optisch gelesen und die erzeugten elektrischen Signale des Lasers interpretiert werden.

Voraussetzung der bekannten Bildinformations-Erkennungssysteme ist, daß der Charakter der Information dem Lesegerät bekannt sein muß, was bedeutet, daß das Lesegerät in seiner Ausgestaltung spezifisch auf die zu lesende und zu interpretierende Information ausgerichtet sein muß, ob es sich beispielsweise um alphanumerische Zeichen oder um einen Barcode handelt. Zur Bildinformationsverarbeitung gehört zwingend, daß zwischen der Anordnung der die Information beinhaltenden Bilder oder Zeichen und dem die Information aufnehmenden Sensor eine feste oder nur in engen Grenzen variable geometrische Zuordnung gewährleistet ist; beispielsweise muß ein Laser-Lesegerät senkrecht oder fast senkrecht zum Barcode über denselben hinweggeführt werden, um ein einwandfreies Erkennen des Bildes bzw. der Information zu gewährleisten. Ebenso ist zur Bildinfor-mationsaufnahme zwingende Voraussetzung, daß die Bilder, ob Barcode oder alphanumerische Zeichen, gegenüber ihrer Umgebung einen Mindestkontrast aufweisen müssen.

Durch die US-A-4 000 397 ist ein Verfahren zum Verarbeiten von binär kodierter Analogsignalen zur Bestimmung des zeitlichen Auftretens von ansteigenden und abfallenden Übergängen bekannt geworden, wie sie aus dem optischen Lesen von Barcodes resultieren. Die Übergänge werden zu ausgewählten Austastzeiten durch die Nulldurchgänge der zweiten Ableitung des Eingangssignals festgestellt. Die ausgewählten Austastzeiten treten immer dann auf, wenn die erste Ableitung des Eingangssignals einen Schwellwert überschreitet, der durch die Feststellung des Scheitelwertes des Eingangssignals bestimmt wird, wobei dieser Wert zu einem gleichgerichteten Rausch-Meßsignal hinzuaddiert wird.

Durch die EP-A3-0 081 316 logischer Wiedererkennungs-Schaltkreis für Barcode-Lesesysteme bekannt geworden zum Lesen von Codes mit mangelhafter Druckqualität. Der Schaltkreis benutzt hierfür statistische Autokorrelationstechniken, um Störungen im Barcode nicht als Information zu mißdeuten.

Mit den bekannten Bildinformations-Erkennungssystemen können deshalb Bilder odern Zeichen nicht gelesen und interpretiert werden, die in mehr oder weniger größerem Umfang Kontraststörungen und/oder Beschädigungen aufweisen. Derartige Probleme entstehen jedoch häufig, beispielsweise durch Ölflecken, mechanische Beanspruchungen, durch das Aufbringen von mechanischen, transparenten Schutzschichten, aber auch durch thermische oder chemische Behandlungen in technologischen Prozessen, und sind ihrer Gesamtheit in industrieller Umgebung unvermeidbar. Ein weiteres Problem besteht darin, daß mit den bekannten Bildinformations-Erkennungssystemen dreidimensional angeordnete Informationen, beispielsweise in die Oberfläche eines metallischen Gegenstandes geätzte alphanumerische Zeichen oder Barcodes, nicht gelesen werden können.

Technische Aufgabe:

Der Erfindung liegt die Aufgabe zugrunde, ein Verfahren und eine Vorrichtung zu schaffen, bei dem die mittels einer Videokamera zu lesende und zu interpretierende Information in Form von Zeichenvorlage als solche unabhängig von der geometrischen Zuordnung der Zeichenvorlage zum Lesegerät qualitativ erkannt wird und die Zeichenvorlage selbst in größerem Umfang Beschädigungen, Verschmutzungen oder Kontraststörungen aufweisen darf, um trotzdem einwandfrei gelesen und interpretiert zu werden. Insbesondere liegt der Erfindung die Aufgabe zugrunde, mittels einer Videokamera einen innerhalb einer Fläche oder im Raum beliebig angeordneten und Störungen aufweisenden Barcode einwandfrei zu lesen und zu interpretieren.

Darstellung der Erfindung und deren Vorteile:

Die Lösung der Aufgabe besteht erfindungsgemäß aus einem Verfahren zum Lesen und Identifizieren der Information einer Zeichenvorlage (Bild), insbesondere eines Barcode, innerhalb eines zwei- oder dreidimensionalen Feldes mittels einer Videokamera und einem Binärprozessor, der aus dem Videosignal des Bildes ein binäres Signal (BIN) erzeugt, wobei das Videosignal $(f(t))$ zweimal nach der Zeit differenziert und aus den Nullstellen der zweiten Ableitung $(f'(t))$ Schaltflanken abgeleitet werden, die nur dann weiterverarbeitet werden, wenn der Betrag des Videosignals der ersten Ableitung $(f(t))$ eine vorgebbare Schwelle (A-A') übersteigt, wobei a) die erste Ableitung $(f(t))$ sowohl nochmals differenziert, als auch einem Fensterkomparator zugeführt und die Schaltflanken der zweiten Ableitung $(f'(t))$ mittels eines Schmitt-Triggers ausgewertet werden, dessen Ausgangssignal $(c_2(t))$ nochmals differenziert und mit dem Ausgangssignal $(c_1(t))$ des Fensterkomparators verknüpft wird, b) die Samplingfrequenz des binären Videosignals größer oder gleich der Samplingfrequenz der Videokamera ist, c) innerhalb einer lokalen Umgebung für eine Mehrzahl von Stützpunkten (Orte) vom Binärsignal die Autokorrelationsfunktion berechnet und mittels einer Segmentierung aus den erhaltenen Werten der Autokorrelation ein lokales Maximum (MAX) und/oder der dazugehörige Richtungswinkel (DIR) ermittelt werden.

Die erste Ableitung $(f(t))$ wird sowohl nochmals differenziert, als auch einem Fensterkomparator zugeführt, die Schaltflanken der zweiten Ableitung $(f'(t))$ werden mittels eines Schmitt-Triggers ausgewertet, dessen Ausgangssignals $(c_2(t))$ nochmals differenziert und mit dem Ausgangssignal $(c_1(t))$ des Fensterkomparators verknüpft wird, wobei ein Flip-Flop die Signale der Schaltflanken der zweiten Ableitung übernimmt und die Verknüpfung durchführt. Das Flip-Flop ist vorteilhaft ein JK-Flip-Flop, wobei die Daten des Schmitt-Triggers mit den erzeugenden Flanken übernommen werden und die Samplingfrequenz des Binärbildes größer oder gleich der Samplingfrequenz der Videokamera ist.

Die Autokorrelationsfunktion innerhalb einer lokalen Umgebung wird für eine Mehrzahl von Orte berechnet, wobei mittels einer Segmentierung aus den erhaltenen Werten der Autokorrelation ein lokales Maximum (MAX) und/oder der dazugehörige Richtungswinkel (DIR) ermittelt werden. Für die Autokorrelation wird vorteilhaft ein Akkumulationsverfahren angewendet, indem eine umschliessende Kontur, vorzugsweise ein Rechteck, vorgegeben wird, und innerhalb der Kontur eine gerichtete Akkumulierung erfolgt. Zur Segmentierung kann zum Beispiel die Autokorrelation für acht Verschiebungsvektoren berechnet werden, wobei diese so gewählt sind, daß sie der Verschiebung vom Zentralpunkt einer beispielsweise 5x5-Umgebung zu Randpunkten hin entsprechen.

Zur Detektierung des Drehwinkels kann eine Kreuzkorrelation der Meßwerte mit einer Sinuskurve berechnet und aus dem so erhaltenen Maximum die Phasenlage und somit der Drehwinkel der parallelen Strukturen ermittelt werden.

Vorteilhaft werden Felder mit gleicher oder benachbarter Richtung mit einer Mindestamplitude zu Objekten zusammengefaßt und für Objekte bestimmter Größe der Schwerpunkt ermittelt wird; das umschreibende Rechteck des Objektes wird parallel zur Hauptachse sowie orthogonal zur Richtung liegende digitale Strecken durch den Schwerpunkt definiert; orthogonal zu den Hauptstrecken werden die Anzahl der schwarzen und weißen Pixel gezählt zur Ermittlung der akkumulierten Intensitätsverteilung entlang der Hauptachse des Barcodes. In vorteilhafter Weise kann das Videosignal $(f(t))$ vor der Bildung der ersten Ableitung $(f(t))$ ein Tiefpaßfilter durchlaufen.

Eine Vorrichtung zur Durchführung des Verfahrens besteht erfindungsgemäß aus einer Vorrichtung zum Lesen und Identifizieren der Information eines Bildes, insbesondere eines Barcode, innerhalb eines zwei- oder dreidimensionalen Feldes mit einer Videokamera und einem Binärprozessor, der aus dem Videosignal des Bildes ein binäres Signal (BIN) erzeugt, wobei mittels Differenzierglieder das Videosignal $(f(t))$ zweimal nach der Zeit differenziert und aus den Nullstellen der zweiten Ableitung $(f'(t))$ Schaltflanken abgeleitet werden, die nur dann weiterverarbeitet werden, wenn der Betrag des Videosignals der ersten Ableitung $(f(t))$ eine vorgebbare Schwelle (A-A') übersteigt, wobei a) die erste Ableitung $(f(t))$ sowohl nochmals differenziert, als auch einem Fensterkomparator zugeführt und die Schaltflanken der zweiten Ableitung $(f'(t))$ mittels eines Schmitt-Triggers (11) ausgewertet werden, dessen Ausgangssignal $(c_2(t))$ nochmals differenziert und mit dem Ausgangssignal $(c_1(t))$ des Fensterkomparators verknüpft wird, b) die Samplingfrequenz des binären Videosignals größer oder gleich der Samplingfrequenz der Videokamera ist, c) innerhalb einer lokalen Umgebung für eine Mehrzahl von Stützpunkten (Orte) vom Binärsignal die Autokorrelationsfunktion berechnet und mittels einer Segmentierung aus den erhaltenen Werten der Autokorrelation ein lokales Maximum (MAX) und/oder der dazugehörige Richtungswinkel (DIR) ermittelt werden.

Das erfindungsgemäße Verfahren und die Vorrichtung besitzt den Vorteil, daß mit dem Bildinformations-Erkennungssystem in weitaus größerem Umfang Kontraststörungen und Beschädigungen oder Unvollständigkeiten des Objektes akzeptiert werden können und das Objekt trotzdem noch sicher als solches erkannt und interpretiert werden kann. Insbesondere beim Lesen und Interpretieren von Barcodes dürfen dieselben selbst in größerem Umfang Beschädigungen, Kontraststörungen oder Verschmutzungen, wie Risse, Ölflecken, Kontrastarmut, aufweisen, um trotzdem noch einwandfrei gelesen und interpretiert zu werden, was mit den herkömmlichen Verfahren nicht möglich ist. Ebenso ist es möglich, nunmehr dreidimensionale Objekte zu lesen und zu interpretieren, beispielsweise einen in eine metallische Oberfläche eingeätzten Barcode. Des weiteren ist es mittels des erfindungsgemäßen Verfahrens und der Vorrichtung möglich, gleichzeitig mehrere Barcodes zu lesen und auszuwerten.

Beim Einsatz in automatischen Lesestationen gewährleistet das erfindungs gemäße Verfahren bei der Anwendung auf Barcodes die Lesbarkeit desselben beliebig verschoben bzw. in weiten Grenzen verdreht im vorgegebenen Blickfeld der Videokamera. Der Abstand zwischen Kamera und Objekt bzw. Barcode kann durch Auswahl geeigneter Objektive in weiten Grenzen angepaßt werden; der Tiefenschärfebereich entspricht dem der üblichen Fotoobjektive. Beim Lesen eines Barcodes muß derselbe nicht parallel zur CCD-Zeile der Videokamera liegen. Es können hierzu auch zwei um 90 Grad zueinander gedrehte Videokameras eingesetzt werden, die mit einem Multiplexer angesteuert werden.

Ebenso können in vorteilhafter Weise bewegte Objekte gelesen und interpretiert werden, z.B. insbesondere bewegte Barcodes. Durch den Einsatz einer CCD-Shutter-Videokamera kann zur Anpassung des erfindungsgemäßen Verfahrens eine ausreichend kurze Belichtungszeit erreicht werden, wobei vorteilhafterweise die Relativgeschwindigkeit des Barcodes kleiner als der Quotient aus der minimalen Strukturbreite des Barcodes (Mode) geteilt durch die Belichtungszeit der CCD-Videokamera sein sollte.

Kurzbeschreibung der Zeichnung, in der zeigen:

| | |
|---|---|
| Figur 1 | ein Blockschaltbild zur Darstellung des gesamten Bildinformations Erkennungssystems anhand der wesentlichsten Bausteine |
| Figur 2 der Figur 3 | ein Blockschaltbild des Binärbildprozessors BIP zur Darstellung Gewinnung des Binärsignals |
| | ein Blockschaltbild zur Darstellung eines Teils des Binärbild prozessors BIP, die Logikschaltung |
| Figuren 4 a bis g | verschiedene Kurvenformen des Videosignals f(t) bis zum Signal BIN an ausgewählten Punkten der vorstehenden Blockschaltbilder |
| Figur 5a | eine Zeichenvorlage nach der Binarisierung in lokale Umgebungen aufgeteilt |
| Firgur 5b | die Ermittlung der Korrelation in einer lokalen Umgebung in ausgewählten Richtungen |
| Figur 5c | die Auswertung der Korrelation der lokalen Umgebung |
| Figur 5d | die Verteilung von Betrag und Richtung der Korrelation im Bild |
| Figur 6 | die Segmentierung des Ergebnisses aus den Figuren 5 a bis d |
| Figur 7 | die Struktur des Korrelators |
| Figur 8 | die Akkumulation sämtlicher gewonnener Strukturen und zwar als Schnitt senkrecht zur Vorzugsrichtung der Streifen der Zeichen-Vorlage durch ein verrauschtes Binärbild |
| Figur 9 | die Summenbildung in Streifenrichtung und Schwellwertentscheidung und |
| Figur 10 | die Klassifikation der Ergebnisse. |

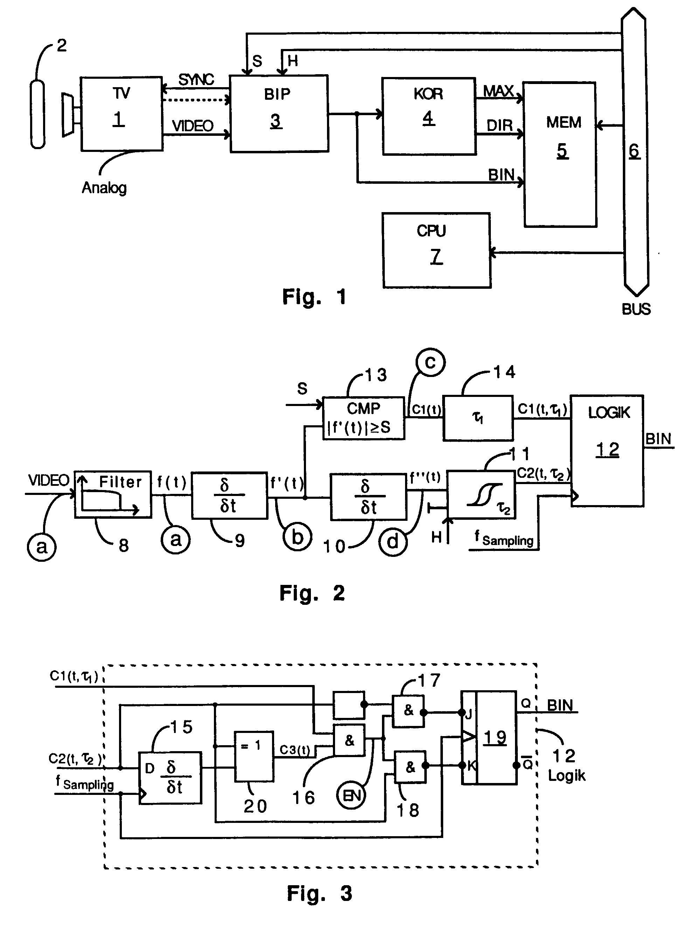

Bevorzugte Ausführungsform der Erfindung, die auf das Lesen und Erkennen eines Barcodes gerichtet ist: Die Struktur des Bildinformations-Erkennungssystems ist in der Figur 1 dargestellt. Eine Videokamera 1 (TV) mit einem optischen Objektiv nimmt eine Zeichen-vorlage 2 auf, die beispielsweise ein Barcode ist, wonach das entstandene Videosignal f(t) einem Binärbildprozessor 3 (BIP) zugeleitet wird, dessen Ausgangssignal BIN einerseits einem Korrelator 4 (KOR) und andererseits direkt einem Bildspeicher 5 (MEM) zugeführt werden. Die Ausgänge DIR und MAX des Korrelators 4 sind ebenfalls auf den Bildspeicher 5 gelegt, der über einen Bus 6 mit einer zentralen Verarbeitungseinheit 7 (CPU) verbunden ist.

Die Videokamera 1 kann einen Zeilen- oder Flächensensor mit prinzipiell bekannten Synchronisationseinrichtungen (Genlock), wie Taktgeneratoren u.a., besitzen und durch einen elektronischen Schnellverschluß (Shutter) ergänzt sein. Im ersten Fall kann eine CCD-Zeilenkamera oder ein eindimensional abgelenkter Laserscanner eingesetzt werden; die Ablenkung in der zweiten Richtung erfolgt entweder durch die natürliche Bewegung der Zeichenvorlage (Objekt) oder durch ein optisches Ablenksystem. Im zweiten Fall wird eine CCD-Matrixkamera eingesetzt. Bei schnell bewegten Objekten wird zweckmäßig eine CCD-Kamera eingesetzt, deren Shutter oder Integrationszeitsteuerung an die Bewegung angepaßt ist. Am Ausgang der Videokamera 1 entsteht somit ein Videosignal f(t) mit Synchronisationsimpulsen, die dem Binärbildprozessor 3 zugeführt werden.

Figur 2 zeigt die Signalverarbeitung und den strukturellen Aufbau des Binärbildprozessors 3. Das Videosignal wird zuerst mittels eines Tiefpasses 8 von hochfrequentem Rauschen und eventuellen Taktstörungen befreit. Nach dem Tiefpass 8 sind zwei Differenzierglieder 9 und 10 mit einem Ausgang für die erste Ableitung f(t) und einem Ausgang für die zweite Ableitung f'(t) des Videosignals f(t) nach der Zeit angeordnet und das Videosignal entsprechend differenziert.

Ein Fensterkomparator 13 (CMP) mit vorgebbarer Fensterbreite S dient zur Untersuchung der ersten Ableitung f(t) und erzeugt ein Ausgangssignal $c_1(t)$ derart, daß:

$$c_1(t) = \begin{cases} 0 & \text{für } |\partial f(t)/\partial t| < S \\ 1 & \text{anderenfalls} \end{cases}$$

ist, mit

f(t) - Videosignal und

S - programmierbare Schwelle des Fensterkomparators 13.

Das Ausgangssignal $c_1(t)$ des Fensterkomparators 13 wird über ein Verzögerungsglied 14 mit der Verzögerungszeit $\tau_1$ zum Laufzeitausgleich geleitet und danach einem Logikglied 12 zugeführt; der Einsatz des Fensterkomparators 13 und des Verzögerungsgliedes 14 stellen eine vorteilhafte Ergänzung des Logikbausteines 12 dar.

Ein zweiter Komparator 11 mit Schmitt-Trigger-Verhalten untersucht die zweite Ableitung f'(t) des Videosignals f(t), wobei die Hysterese H des Schmitt-Triggers 11 programmierbar ist gemäß:

$$c2(t) = \begin{cases} 0 & \text{für } \partial_2 f(t)/\partial t^2 < -H \, \text{SGN}\,[\partial_2 f(t\text{-}\tau_2)/\partial t^2] \\ 1 & \text{anderenfalls} \end{cases}$$

mit

$\tau_2$ - Laufzeit des Schmitt-Triggers 11

SGN - Vorzeichen

H - programmierbare Hysterese des Schmitt-Triggers 11

Der Schmitt-Trigger ist vorzugsweise ein invertierender Schmitt-Trigger mit einer invertierenden Schwelle von plus nach minus, was vorzugsweise dazu dient, das Rauschen zu verringern. Ist das Signal größer als die vorgegebene Schwelle, so ändert der Schmitt-Trigger seinen Zustand und liefert ein positives Signal $c_2(t)$, das ebenfalls dem Logikglied 12 aufgegeben wird; vorteilhaft können $\tau_1 = \tau_2$ sein.

Gemäß der Figur 3 wird das Ausgangssignal $c_2(t)$ des Schmitt-Triggers 11 durch ein digitales Differenzierglied 15 untersucht, welches Teil des Logikgliedes 12 ist, und dabei nochmals differenziert:

$$c3(T_n) = \begin{cases} 0 & \text{für } c2(t_n) = c2(t_{n\text{-}1}) \\ 1 & \text{anderenfalls} \end{cases}$$

mit

$t_n$ - Takt mit laufendem Index n.

Das Ausgangssignal $c_1(t)$ des Verzögerungsgliedes wird innerhalb eines UND-Gliedes 16 mit dem Signal $c_3(T_n)$ verknüpft und das Summensignal $_{EN}$ gebildet:

$$EN = \begin{cases} 0 & \text{für } c3(T) \cap c2(T) = 0 \\ 1 & \text{anderenfalls} \end{cases}$$

Anschließend wird mit dem Signal $_{EN}$ die Signalübernahme eines JK-Flip-Flops 19 so gesteuert, daß das geeignet verzögerte Signal $c_2(T_n)$ genau dann in das Flip-Flop 19 übernommen wird, wenn dafür die Erlaubnis $_{EN} = 1$ im vorangegangenen Takt erteilt wurde.

Das $_{EN}$-Signal öffnet dann die beiden NANDS 17, 18 (Figur 3), wenn somit

a) die 1. Ableitung einen Mindestkontrast aufweist
b) in der zweiten Ableitung eine Nullstelle vorhanden ist
c) die zweite Ableitung ebenfalls einen Mindestkontrast aufweist.

Somit werden vorzugsweise nur die Nullstellen der zweiten Ableitung ausgewertet, die oberhalb einer bestimmten Kontrastschwelle liegen, die aus der ersten Ableitung herrührt. Das $_{EN}$-Signal läßt nur die Schaltflanken passieren, die die Merkmale a) bis c) erfüllen, wobei die Schaltflanken diejenigen Stellen sind, an denen sich $c_2(t)$ ändert und somit eine dritte Ableitung $c_3(t)$ vorhanden ist.

Die Funktion der Figuren 2 und 3 wird anhand der Figuren 4a bis 4g veranschaulicht. Die Darstellung 4a zeigt einen Schwarz-Weiß-Sprung im Videosignal f(t), wobei die ausgezogene Kurve 21 eine solche mit geringer Beleuchtungsstärke, die gepunktete Kurve 22 eine solche mit großer Beleuchtungsstärke und die gepunktete Kurve 25 eine solche im defokussierten Zustand darstellen; in den Figuren 4b und 4c entsprechen die gepunkteten Kurven 22', 22" jeweils einer großen Beleuchtungsstärke. In den Figuren 4b und 4c sind die 1. und 2. Ableitung nach der Zeit dargestellt; die gepunktete Kurve 25' in Figur 4 b bedeutet die gleiche Funktion im defokussierten Zustand.

Man erkennt deutlich die Invarianz der Lage des Wendepunkts des Schwarz-Weiß-Sprungs im Videosignal f(t) von der Beleuchtungsstärke und der Fokussierung. Das Vorzeichen des Anstiegs der zweiten Ableitung f'(t) in der Nähe des Wendepunktes des Videosignals charakterisiert ferner, ob es sich um einen Schwarz-Weiß-Sprung oder um einen Weiß-Schwarz-Sprung handelt. Aus diesem Grund kann aus den Nullstellen der 2. Ableitung das Binärbild vollständig rekonstruiert werden. Ebenso erkennt man, daß die Nullstellen der 2. Ableitung von der Beleuchtung unabhängig sind.

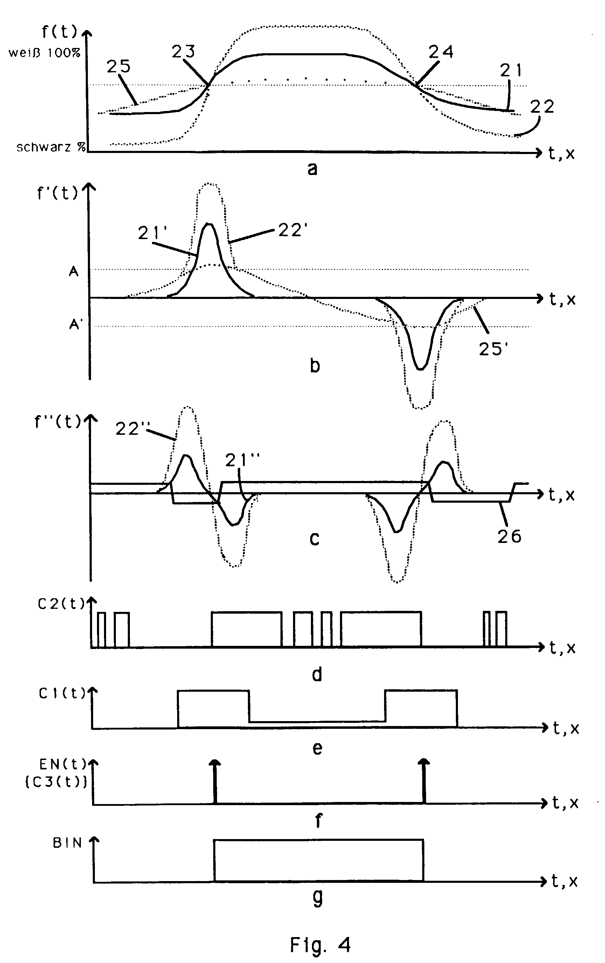

Notwendig ist hierbei jedoch eine Unterscheidung der Nullstellen, die Schwarz-Weiß-Übergänge oder umgekehrt repräsentieren, von Störungen, die bei vorhandenem Rauschen und fehlendem Kontrast (homogene Flächen) ebenfalls zu Nulldurchgängen des elektrischen Signals führen. Deshalb wird durch eine Schwellwertentscheidung aus der ersten Ableitung ein Fenster A-A' (Figur 4b) gebildet, in dem der Kontrast bewertet wird und in welchem die Nullstellen der 2. Ableitung ausgewertet werden können. Dieses Fenster ist beleuchtungsabhängig, jedoch unkritischer, als die bekannte direkte Schwellwertentscheidung im Videosignal. Die 2. Ableitung ist auch im Bereich konstanter Schwärzung Null, so daß hier Rauschen und andere Störungen zu Flanken des Schmitt-Triggers 11 führen könnten. Das bedeutet, daß nur die Nullstellen der 2. Ableitung ausgewertet werden, die oberhalb einer Kontrastschwele liegen, die aus der 1. Ableitung herrührt.

In ähnlicher Weise störungsunterdrückend wirkt die Hysterese 26 (in Figur 2 "H") des Schmitt-Triggers 11. Das Signal $c_2(t)$ des Schmitt-Triggers 11 ist in Figur 4d gezeigt. Die hohe Empfindlichkeit des Verfahrens liefert im Binärbild auch Konturen kontrastarmer Details, die durch Auswahl der Schwellen H und S und ggf. A-A' je nach Bedarf zugelassen oder verboten d.h. vorgegeben werden können.

Die Abtastung des Binärbildes wird mit einer Samplingfrequenz durchgeführt, die vorteilhaft über der Pixelfrequenz der Videokamera liegen kann. Das ist dann günstig, wenn durch Subpixelinterpolation bei bekannten Bildstrukturen, zum Beispiel Barcodes, eine höhere Abtastgenauigkeit erzielt werden soll. Die Länge wird hier genauer bestimmt, als es das Raster des Abtasters eigentlich zuläßt. Dabei wird die Grauwertauflösung verringert, um die Längenauflösung zu erhöhen, was vorteilhaft bis zu einer Auflösung von ca. 4:1 gegeben ist. Beim Einsatz als Barcodeleser können deshalb auch Codes, deren kleinstes Strukturelement im Ortsfrequenzbereich in der Nähe der Nyquistfrequenz liegt, sicher erkannt werden.

Die Figuren 4 e-g zeigen die zugehörige Funktion von $c_1(t)$ des Fensterkomparators 13, sowie das Signal $_{EN}(t)$ und das zugehörige Binärsignal $_{BIN}$.

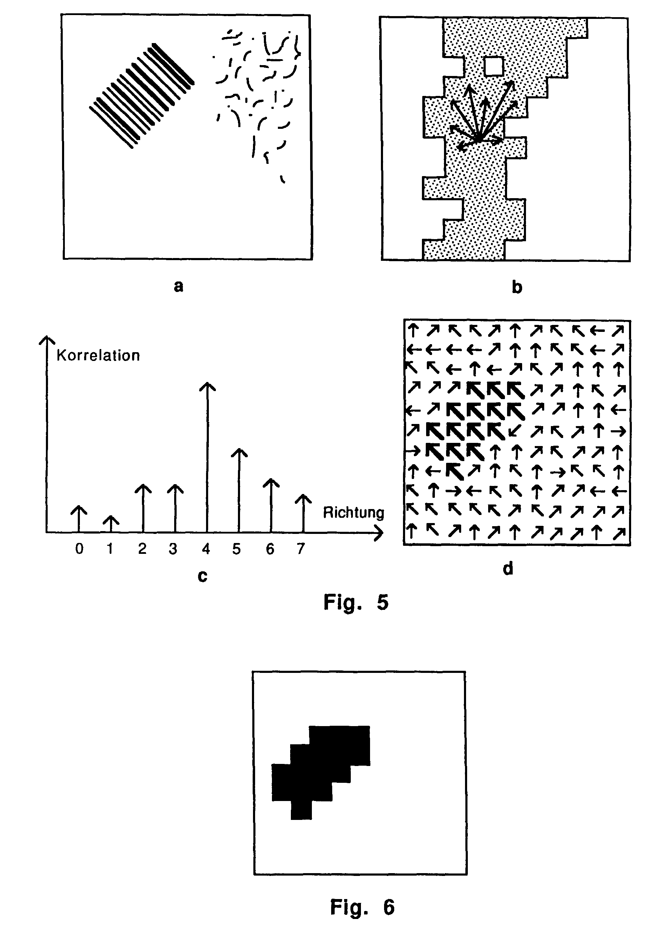

Die Figuren 5 bis 7 zeigen die Signalverarbeitung des Korrelators 4 (KOR). Die Aufgabe des Korrelators 4 besteht in allgemeiner Weise darin, die Abbildungsstruktur des Objektes zu analysieren und vorgegebene bzw. gesuchte Strukturen zu ermitteln. Handelt es sich um einen Barcode, so besteht insbesondere die Aufgabe des Korrelators 4 darin, parallele Linienstrukturen des Barcodes zu detektieren und deren Richtung zu ermitteln.

Es wird davon ausgegangen, daß in einer lokalen Umgebung ($\Delta x.\Delta y$) eines Testpunktes ($P\{x_0,y_0\}$) innerhalb des Gesichtsfeldes der Videokamera die Autokorrelationsfunktion ACF ermittelt wird, um dergestalt ein Abhängigkeitsmaß anzugeben. Die ACF weist beispielsweise bei vorhandenem Barcode charakteristische Maxima (Verschiebungsvector $R\uparrow$ in Richtung der Bars) und Minima (Verschiebungsvektor $R\uparrow$ senkrecht zu diesen) auf. Für einen Test ist es vorteilhaft, die diskreten Werte des Verschiebungsvektors $R\uparrow$ in Polarkoordinaten ($\zeta, \varphi$) anzugeben und eine begrenzte Anzahl diskreter Winkel im Bereich von $\phi$ bis $\pi$ zu untersuchen:

$$\mathrm{ACF}\,(x_0, y_0, \zeta, \varphi) = 1/\Delta x.\Delta y \int_{x_0}^{x_0 + \Delta x} \int_{y_0}^{y_0 + \Delta y} \mathrm{f}(x, y) \cdot \mathrm{f}(x - \zeta \cos\varphi, y - \zeta \sin\varphi)\, dxdy$$

oder im digitalen Raster:

$$\mathrm{ACF(DIR)} = 1/\Delta x.\Delta y \sum_{i=0}^{i_{max}} \sum_{j=0}^{j_{max}} \mathrm{f}(x_0 + a_i - \zeta_K \cos\varphi_K, y_0 + b_j - \zeta_K \cos\varphi_K)$$

Im Binärbild wird die Multiplikation der ACF-Berechnung zweckmäßig auf eine EXOR-Funktion zurückgeführt:

$$f_1 \cdot f_2 = \begin{cases} \phi & \text{wenn } f_1 = f_2 \\ 1 & \text{wenn } f_1 \neq f_2 \end{cases}$$

Im Ergebnis der Berechnung der ACF über der lokalen Fläche der Ausdehnung xy für ausgewählte diskrete Winkel (DIR) entsteht eine Anzahl von Funktionswerten, aus denen das Maximum (max) gesucht und der zugeordnete Winkel (DIR) bestimmt wird. Aus der ACF werden somit zwei Aussagen abgeleitet, nämlich erstens über das Maximum (max) der ACF innerhalb der lokalen Umgebung und zweitens über die Richtung DIR des Maximums der ACF:

$$\max (x_o, y_o) = \max [ACF(x_o, y_o, \zeta_K \varphi_K)]$$

$$DIR(x_o, y_o) = K, \text{ wenn } ACF(x_o, y_o, \zeta_K \varphi_K) = \max$$

oder:

$$DIR = \varphi_n \text{ wenn } ACF(n) = \max$$

Falls es sich um einen Barcode handelt, ergibt sich das Minimum der ACF genau in der zu DIR(max) um 90 Grad gedrehten Richtung. Umgekehrt ist also die normierte Differenz (KTR)

$$KTR = \frac{ACF_{max} - ACF_{min}}{ACF_{max} + ACF_{min}}$$

ein Kontrastmaß für vorhandenen Barcode und kann direkt zur Segmentierung herangezogen werden, die in Figur 6 gezeigt ist.

Figur 5 zeigt eine Möglichkeit der Auswahl der Stützstellen zur Ermittlung der ACF (bei gleicher Winkeldrehung φ), in Figur 5 d ist das Ergebnis der Korrelation dargestellt. Im gezeigten Beispiel hat die lokale Umgebung das Format 5x5 Bildelemente, von denen aus Symmetriegründen jedoch beispielsweise nur die oberhalb des Zentralpunktes liegenden Bildpunkte berücksichtigt zu werden brauchen. Dazu werden die aktuelle sowie zwei vorangegangene Zeilen in Schieberegistern, gegebenenfalls mit RAM-Unterstützung, gehalten. Über Anzapfungen können die gewünschten Bildelemente erreicht und nach Figur 5 b verknüpft werden, wobei die Ausgänge der EXOR-Verknüpfungen durch Zähler getaktet werden. Nach dem Abschluß der Integration stehen in den Zählern Zwischenwerte der ACF, die dann noch in vertikaler Richtung addiert werden müssen. Über eine Tabelle (Speicher) oder mehrere hierarchisch angeordnete Kompa-ratoren und Multiplexer wird das Maximum max der ACF ermittelt und die zugeordnete Richtung (DIR) ausgegeben. In einer zweiten Realisierung werden die Messwerte der ACF (DIR), d.h. die Häufigkeiten des Auftretens der Richtungen angegeben.

Die Werte MAX, MIN und DIR werden als Funktion der Koordinaten der zugeordneten Meßfelder (Δx.Δy) abgespeichert. Aus diesen Meßmatrizen wird durch Schwellwertentscheidungen die Lage des Barcodes im Bild und sein Drehwinkel detektiert. Dadurch wird das Gebiet, in dem sich der Barcode befindet, segmentiert, was in Figur 6 dargestellt ist. Dazu werden zusammenhängende Objekte mit identischer oder benachbarter Richtung ermittelt.

Die Segmentierung dient zur Detektierung paralleler Strukturen, wie z.B. Barcodes, in Binärbildern. Dazu wird die Autokorrelation für 8 Verschiebungs-vektoren berechnet. Die Verschiebungsvektoren werden so gewählt, daß sie der Verschiebung vom Zentralpunkt einer 5 x 5 Umgebung zu Randpunkten entsprechen. Aus Symmetriegründen sind von den 16 Randpunkten nur 8 zu berücksichtigen:

| 2 | 3 | 4 | 5 | 6 |
|---|---|---|---|---|
| 1 |   |   |   | 7 |
| 0 |   | X |   |   |
|   |   |   |   |   |
|   |   |   |   |   |

— Richtung

Das Gesamtbild von z.B. 384 x 288 Pixeln wird vorteilhafterweise in 24 x 18 Felder von 16 x 16 Pixeln unterteilt. Die Autokorrelation wird für Felder von 16 x 16 Pixeln so berechnet, daß die 5 x 5 Umgebungen vollständig innerhalb des Feldes liegen. Zur genauen Detektierung des Drehwinkels wird eine Kreuzkorrelation der Meßwerte mit einer Sinuskurve berechnet. Aus dem Maximum der Korrelation wird die Phasenlage und damit der Drehwinkel der parallelen Strukturen ermittelt. Die Amplitude (Differenz zwischen Maximum und Minimum der Korrelationswerte) ist ein Maß für das Vorhandensein von parallelen Strukturen innerhalb des Feldes. Als Ergebnis erhält man eine Struktur der Größe 24 x 18 mit dem absoluten Richtungswert und der Amplitude.

In einem weiteren Schritt werden Felder mit gleicher oder benachbarter Richtung, bei denen die Amplitude eine bestimmte Schwelle überschreitet, zu Objekten zusammengefaßt. Für Objekte bestimmter Größe wird der Schwerpunkt ermittelt. Parallel zur Hauptachse (orthogonal zur Richtung liegende digitale Strecke durch den Schwerpunkt) wird ein umschreibendes Rechteck des Objektes definiert:

Hauptachse

Schwerpunkt

Richtung der parallelen Strukturen

umschreibendes Rechteck

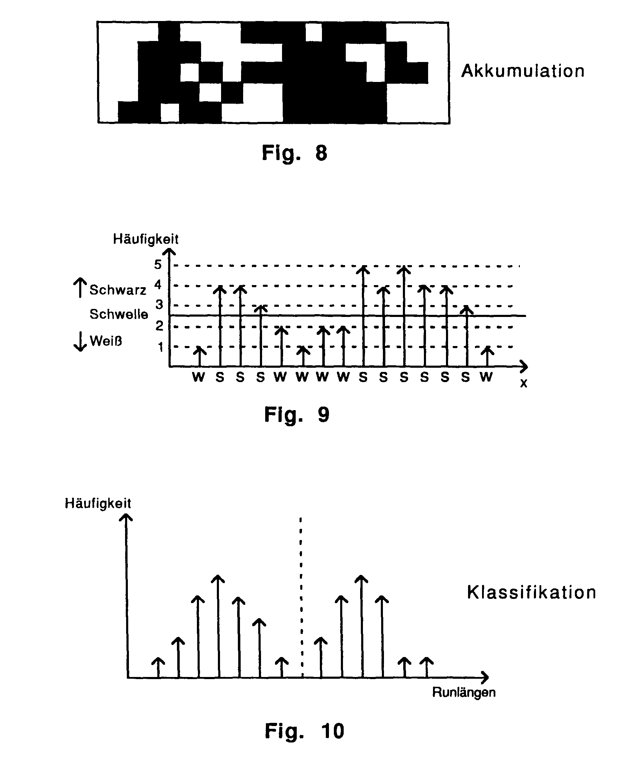

Innerhalb des umschreibenden Rechtecks wird orthogonal zu den Hauptstrecken die Anzahl der schwarzen und weißen Pixel gezählt. Als Ergebnis erhält man die akkumulierte Intensitätsverteilung entlang der Hauptachse des Barcodes. Innerhalb der Objekte erfolgt die genaue Messung des Drehwinkels des Barcodes durch Korrelation von Bildzeilen innerhalb des Barcodefeldes und die gerichtete Akkumulation des Barcodes (Figur 8). Dazu wird eine Anzahl von digitalen Meßgeraden mit dem berechneten Drehwinkel innerhalb des Objektes verlegt. Auf jeder dieser Meßgeraden werden die weißen und schwarzen Bildpunkte, die innerhalb des zu untersuchenden Objektes liegen, getrennt gezählt (Figur 9); anschliessend wird der Meßgeraden der Wert "weiß" zugewiesen, wenn mehr weiße als schwarze Punkte festgestellt wurden, anderenfalls schwarz, was Figur 9 zeigt.

Die geordnete Folge der so erhaltenen Meßwerte wird Run-Length codiert (Figur 10), es erfolgt die Bestimmung von Lauflängenhistogrammen, getrennt für weiß und schwarz, d.h. aus der Verteilung der Intensität. Aus diesen Histogrammen werden die Schwellen für die Längen der Runs festgelegt. Dadurch erfolgt eine Einteilung der weißen und schwarzen Streifen nach ihrer Breite. Anhand dieser Klassifizierungsdaten erfolgt die Erkennung des Typs des vorliegenden Barcodes und seine Decodierung.

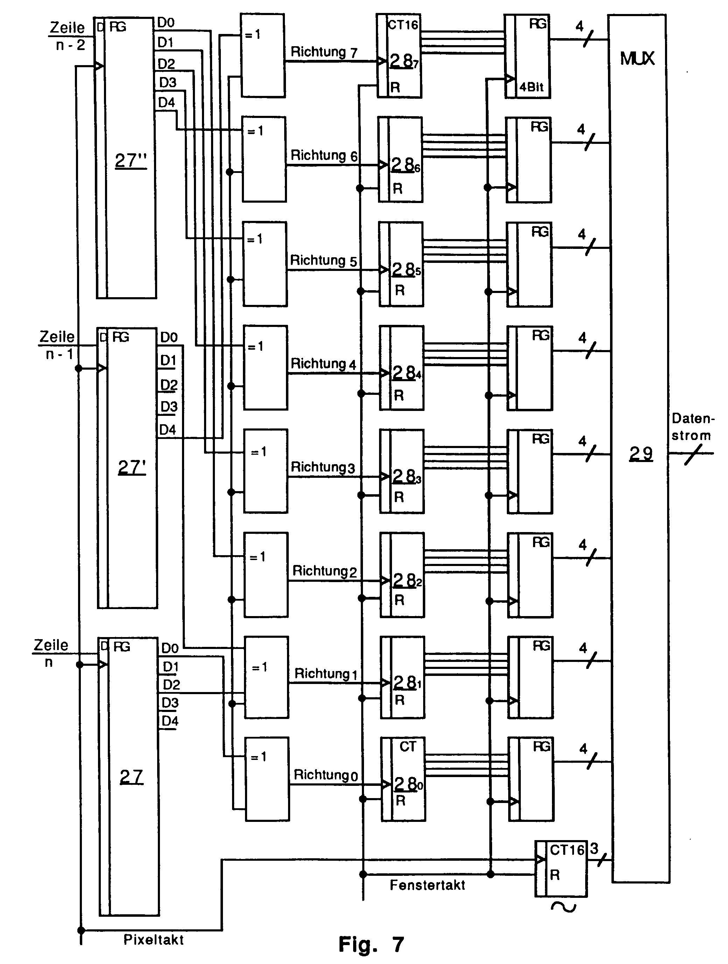

Die Figur 7 zeigt eine mögliche Struktur des Korrelators 4. Im gezeigten Beispiel hat die lokale Umgebung (2N+1)-Spalten und zwei Zeilen; die aktuelle und die vorangegangene Zeile befinden sich in Schieberegistern 27, 27', 27". Über Anzapfungen können die Bildelemente nach Figur 5 verknüpft werden. Die EXOR-Verknüpfungen takten nachgeschaltete Zähler $28_0$, $28_1$, $28_2$, $28_3$, $28_4$, $28_5$, $28_6$, $28_7$, in denen nach Abschluß der Integration die ACF ($x_0$, $y_0$, $\zeta_K$, $\varphi_K$) steht. Über eine Tabelle 29 (MUX) oder gestaffelte Komparatoren und Multiplexer wird das Maximum MAX der ACF gebildet und die Richtung DIR auf den Ausgang geschaltet. Die Tabelle (MUX) schließt spezielle Zustände aus, zum Beispiel völlig weiße oder völlig schwarze Zonen, und gewährleistet eine Interpolation der Richtung zwischen den Stützstellen; die Tabelle kann auch durch eine hierarchische Komparatorenanordnung erstellt werden.

EP 0 484 935 B1

Gewerbliche Anwendbarkeit:

Der Gegenstand der Erfindung ist vorteilhafterweise in Bildinformations-Erkennungssystemen gewerblich anwendbar, mit denen ein Objekt trotz Kontraststörungen, Beschädigungen, Verschmutzungen oder Unvollständigkeiten noch sicher als solches erkannt und interpretiert werden kann, insbesondere für das Lesen und Interpretieren von Barcodes. Der Gegenstand der Erfindung ist insbesondere in automatischen Lesestationen einsetzbar und gewährleistet dort bei der Anwendung zum Erkennen von Barcodes die Lesbarkeit derselben und zwar beliebig verschoben bzw. in weiten Grenzen verdreht im vorgegebenen Blickfeld der Videokamera.

Liste der Bezugszeichen:

| | |
|---|---|
| 1 | Videokamera |
| 2 | zu untersuchendes Objekt |
| 3 | Binärbildprozessor |
| 4 | Korrelator |
| 5 | Bildspeicher |
| 6 | Bus |
| 7 | CPU |
| 8 | Tiefpaß |
| 9 | Differenzierglied der ersten Ableitung f(t) |
| 10 | Differenzierglied der zweiten Ableitung f'(t) |
| 11 | Schmitt-Trigger |
| 12 | Logikschaltung |
| 13 | Fensterkomparator |
| 14 | Verzögerungsglied |
| 15 | digitales Differenzierglied |
| 16,20 | UND-Glieder |
| 17, 18 | NAND-Glieder |
| 19 | JK-Flip-Flop |
| 21,22 | Schwarz-Weiß-Sprung im Videosignal f(t) geringer bzw. großer Beleuchtungsstärke |
| 21', 22' | 1. Ableitung der Schwarz-Weiß-Sprünge im Videosignal f(t) |
| 23, 24 | Wendepunkte |
| 25, 25' | defokussiertes Videosignal und dessen 1. Ableitung |
| 26 | Hystereskurve des Schmitt-Triggers |
| 27, 27', 27" | Schieberegister |
| $28_0$, $28_1$, $28_2$, $28_3$, $28_4$, $28_5$, $28_6$, $28_7$ | Zähler |
| 29 | Tabelle oder hierarchischer Komparator |

**Patentansprüche**

1. Verfahren zum Lesen und Identifizieren der Information einer Zeichen-vorlage (Bild), insbesondere eines Barcode, innerhalb eines zwei- oder dreidimensionalen Feldes mittels einer Videokamera (1) und einem Binärprozessor (3), der aus dem Videosignal des Bildes ein binäres Signal (BIN) erzeugt, wobei das Videosignal (f(t)) zweimal nach der Zeit differenziert und aus den Nullstellen der zweiten Ableitung (f'(t)) Schaltflanken abgeleitet werden, die nur dann weiterverarbeitet werden, wenn der Betrag des Videosignals der ersten Ableitung (f(t)) eine vorgebbare Schwelle (A-A') übersteigt, gekennzeichnet durch folgende Merkmale:

a) die erste Ableitung (f(t)) wird sowohl nochmals differenziert, als auch einem Fensterkomparator (13) zugeführt und die Schaltflanken der zweiten Ableitung (f'(t)) werden mittels eines Schmitt-Triggers (11) ausgewertet, dessen Ausgangssignals ($c_2(t)$) nochmals differenziert und mit dem Ausgangssignal ($c_1(t)$) des Fensterkomparators (13) verknüpft wird

b) die Samplingfrequenz des binären Videosignals ist größer oder gleich der Samplingfrequenz der Videokamera

c) innerhalb einer lokalen Umgebung wird für eine Mehrzahl von Stützpunkten (Orte) vom Binärsignal die Autokorrelationsfunktion berechnet und mittels einer Segmentierung werden aus den erhaltenen Werten der Autokorrelation ein lokales Maximum (MAX) und/oder der dazugehörige Richtungswinkel (DIR) ermittelt.

9

**2.** Verfahren nach Anspruch 1, dadurch gekennzeichnet,
daß ein Flip-Flop (19) die Signale der Schaltflanken der zweiten Ableitung (f'(t)) übernimmt und die Verknüpfung durchführt.

**3.** Verfahren nach Anspruch 2, dadurch gekennzeichnet,
daß das Flip-Flop ein JK-Flip-Flop (19) ist und die Daten des Schmitt-Triggers (11) mit den erzeugenden Flanken übernommen werden und daß die Samplingfrequenz des Binärbildes größer oder gleich der Samplingfrequenz der Videokamera (1) ist.

**4.** Verfahren nach Anspruch 1, dadurch gekennzeichnet,
daß für die Autokorrelation ein Akkumulationsverfahren angewendet wird, indem eine umschließende Kontur, vorzugsweise ein Rechteck, vorgegeben wird, innerhalb der eine gerichtete Akkumulierung erfolgt.

**5.** Verfahren nach Anspruch 1, dadurch gekennzeichnet,
daß zur Segmentierung die Autokorrelation für acht Verschiebungsvektoren berechnet wird, wobei diese so gewählt sind, daß sie der Verschiebung vom Zentralpunkt einer 5x5-Umgebung zu Randpunkten hin entsprechen.

**6.** Verfahren nach Anspruch 1, dadurch gekennzeichnet,
daß zur Detektierung des Drehwinkels eine Kreuzkorrelation der Meßwerte mit einer Sinuskurve berechnet und aus dem so erhaltenen Maximum die Phasenlage und der Drehwinkel der parallelen Strukturen ermittelt werden.

**7.** Verfahren nach Anspruch 4, dadurch gekennzeichnet,
daß Felder mit gleicher oder benachbarter Richtung mit einer Mindestamplitude zu Objekten zusammengefaßt werden und für Objekte bestimmter Größe der Schwerpunkt ermittelt wird und parallel zur Hauptachse sowie orthogonal zur Richtung liegende digitale Strecken durch den Schwerpunkt das umschreibende Rechteck des Objektes definiert und orthogonal zu den Hauptstrecken die Anzahl der schwarzen und weißen Pixel gezählt werden zur Ermittlung der akkumulierten Intensitätsverteilung entlang der Hauptachse des Barcodes.

**8.** Verfahren nach Anspruch 1, dadurch gekennzeichnet,
daß das Videosignal (f(t)) vor der Bildung der ersten Ableitung (f(t)) ein Tiefpaßfilter (8) durchläuft.

**9.** Verfahren nach Anspruch 1, dadurch gekennzeichnet, daß das Ausgangssignal ($c_1$(t)) des Fensterkomparators (13) über ein Verzögerungsglied (14) zum Laufzeitausgleich mit der Laufzeit $\tau_1$ geführt wird und der Bedingung gehorcht:

$$c_1(t) = \begin{cases} 0 & \text{für } |\partial f(t)/\partial t| < S \\ 1 & \text{anderenfalls} \end{cases}$$

mit
    f(t) - Videosignal und
      S - programmierbare Schwelle des Fensterkomparators 13.

**10.** Verfahren nach Anspruch 1, dadurch gekennzeichnet, daß zur Untersuchung der zweiten Ableitung (f'(t)) der Schmitt-Trigger (11) folgender Bedingung gehorcht:

$$c_2(t) = \begin{cases} 0 & \text{für } \partial_2 f(t)/\partial t^2 < -H \, \text{SGN} [\partial_2 f(t-\tau_2)/\partial t^2] \\ 1 & \text{anderenfalls} \end{cases}$$

mit
    $\tau_2$ - Laufzeit des Schmitt-Triggers 11
    SGN - Vorzeichen
      H - programmierbare Hysterese des Schmitt-Triggers 11.

11. Verfahren nach Anspruch 1, dadurch gekennzeichnet,
daß zwei Videokameras zum Einsatz gelangen, die gegeneinander um 90 Grad gedreht sind und mittels eines Multiplexers angesteuert werden.

12. Vorrichtung zum Lesen und Identifizieren der Information eines Bildes, insbesondere eines Barcode, innerhalb eines zwei- oder dreidimensionalen Feldes mittels einer Videokamera (1) und einem Binärprozessor (3), der aus dem Videosignal des Bildes ein binäres Signal (BIN) erzeugt, wobei mittels Differenzierglieder (9,10) das Videosignal (f(t)) zweimal nach der Zeit differenziert und aus den Nullstellen der zweiten Ableitung (f'(t)) Schaltflanken abgeleitet werden, die nur dann weiterverarbeitet werden, wenn der Betrag des Videosignals der ersten Ableitung (f'(t)) eine vorgebbare Schwelle (A-A') übersteigt, gekennzeichnet durch folgende Merkmale:

a) die erste Ableitung (f'(t)) wird sowohl nochmals differenziert, als auch einem Fensterkomparator (13) zugeführt und die Schaltflanken der zweiten Ableitung (f"(t)) werden mittels eines Schmitt-Triggers (11) ausgewertet, dessen Ausgangssignals ($c_2(t)$) nochmals differenziert und mit dem Ausgangssignal ($c_1(t)$) des Fensterkomparators (13) verknüpft wird
b) die Samplingfrequenz des binären Videosignals ist größer oder gleich der Samplingfrequenz der Videokamera
c) innerhalb einer lokalen Umgebung wird für eine Mehrzahl von Stützpunkten (Orte) vom Binärsignal die Autokorrelationsfunktion berechnet und mittels einer Segmentierung werden aus den erhaltenen Werten der Autokorrelation ein lokales Maximum (MAX) und/oder der dazugehörige Richtungswinkel (DIR) ermittelt.

**Claims**

1. Process for reading and identifying information contained in a drawing (image), in particular a bar code, in a two- or three-dimensional field by means of a video camera (1) and a binary processor (3), which generates a binary signal (BIN) from the video signal of the image, whereby the video signal (f(t)) is differentiated twice on the basis of the time, and switching slopes are derived from the zero points of the second derivative (f'(t)) and they are only further processed when the value of the video signal of the first derivative (f'(t)) exceeds a predefinable threshold (A-A'), characterized by the following features:

a) the first derivative (f'(t)) is differentiated once again as well as transmitted to a window comparator (13), and the switching slopes of the second derivative (f"(t)) are evaluated by means of a Schmitt trigger (11) whose output signal ($c_2(t)$) is differentiated once again and linked with the output signal ($c_1(t)$) of the window comparator (13),
b) the sampling frequency of the binary video signal is greater than or equal to the sampling frequency of the video camera,
c) within a local environment, the autocorrelation function is calculated for a plurality of support points (sites) of the binary signal and, by means of a segmentation, a local maximum (MAX) and/or the appertaining directional angle (DIR) are determined from the obtained values from the autocorrelation.

2. Process according to Claim 1, characterized in that
a flip-flop (19) imports the signals from the switching slopes of the second derivative (f"(t)) and executes the linking.

3. Process according to Claim 2, characterized in that
the flip-flop is a JK flip-flop (19) and the data of the Schmitt trigger (11) is taken over with the generating slopes, and in that the sampling frequency of the binary image is greater than or equal to the sampling frequency of the video camera (1).

4. Process according to Claim 1, characterized in that
an accumulation process is used for the autocorrelation, whereby a surrounding contour, preferably a rectangle, is specified within which an oriented accumulation takes place.

5. Process according to Claim 1, characterized in that,
for purposes of segmentation, the autocorrelation is calculated for eight displacement values, whereby they are selected in such a way that they correspond to the displacement of the central point of a 5×5 ambient environment towards edge pixels.

6. Process according to Claim 1, characterized in that,
in order to detect the angle of rotation, a cross-correlation of the measured values is calculated with a sinus curve and, from the maximum thus obtained, the phase position and the angle of rotation ofthe parallel structures are determined.

7. Process according to Claim 4, characterized in that
fields having the same or adjacent directions are combined with a minimum amplitude to form objects and the center of gravity is determined for objects of a certain size, and the rectangle circumscribing the object is defined by the center of gravity parallel to the main axis as well as orthogonally to the direction of digital lying segments, and orthogonally to the main segments, the number of black and white pixels are counted in order to determine the accumulated intensity distribution along the main axis of the bar code.

8. Process according to Claim 1, characterized in that
the video signal (f(t)) passes through a low-pass filter (8) before the formation of the first derivative (f(t)).

9. Process according to Claim 1, characterized in that
the output signal $(c_1(t))$ of the window comparator (13) is transmitted with the propagation time $\tau_1$ via a delay element (14) to the propagation-time compensation and it obeys the condition:

$$c_1(t) = \begin{cases} 0 & \text{for } |\, \partial\, f(t)\, /\, \partial t\, | < S \\ 1 & \text{otherwise} \end{cases}$$

wherein
    f(t) = video signal and
    S = programmable threshold of the window comparator (13).

10. Process according to Claim 1, characterized in that,
in order to study the second derivative (f"(t)), the Schmitt trigger (11) obeys the following condition:

$$c_2(t) = \begin{cases} 0 & \text{for } \partial_2\, f(t)\, /\, \partial t^2 < \text{-H SGN}\, [\partial_2\, f(t\text{-}\tau_2)\, /\, \partial t^2] \\ 1 & \text{otherwise} \end{cases}$$

wherein
$\tau_2$ - propagation time of the Schmitt trigger (11)
SGN - algebraic sign
H - programmable hysteresis of the Schmitt trigger (11)

11. Process according to Claim 1, characterized in that
two video cameras are used which are turned by 90 degrees with respect to each other and controlled by means of a multiplexer.

12. Process for reading and identifying the information contained in an image, in particular a bar code, in a two- or three-dimensional field by means of a video camera (1) and a binary processor (3), which generates a binary signal (BIN) from the video signal of the image, whereby, by means of differentiating elements (9, 10), the video signal (ft)) is differentiated twice on the basis of the time, and switching slopes are derived from the zero points of the second derivative (f"(t)) and they are only further processed when the value of the video signal of the first derivative (f"(t)) exceeds a predefinable threshold (A-A'), characterized by the following features:

a) the first derivative (f'(t)) is differentiated once again as well as transmitted to a window comparator (13), and the switching slopes of the second derivative (f"(t)) are evaluated by means of a Schmitt trigger (11) whose

output signal ($c_2$(t)) is differentiated once again and linked with the output signal ($c_1$(t)) of the window comparator (13),

b) the sampling frequency of the binary video signal is greater than or equal to the sampling frequency of the video camera,

c) within a local environment, the autocorrelation function is calculated for a plurality of support points (sites) of the binary signal and, by means of a segmentation, a local maximum (MAX) and/or the appertaining directional angle (DIR) are determined from the obtained values from the autocorrelation.

**Revendications**

1. Procédé pour lire et identifier l'information d'un modèle de signe (image), notamment d'un code à barres, à l'intérieur d'un champ bidimensionnel ou tridimensionnel à l'aide d'une caméra vidéo (1) et d'un processeur binaire (3), qui produit un signal binaire (BIN) à partir du signal vidéo de l'image, et selon lequel le signal vidéo (f(t)) est différentié deux fois dans le temps et des flancs de commutation sont dérivés des points d'annulation de la dérivée seconde (f''(t)), flancs qui sont traités ultérieurement uniquement lorsque la valeur absolue du signal vidéo de la dérivée première (f'(t)) dépasse un seuil (A-A') pouvant être prédéterminé, caractérisé par les caractéristiques suivantes :

   a) la dérivée première (f'(t)) est à la fois à nouveau différentiée et également envoyée à un comparateur à fenêtre (13) et les flancs de commutation de la dérivée seconde (f''(t)) sont évalués au moyen d'un déclencheur de Schmitt (11), dont le signal de sortie ($c_2$(t)) est à nouveau différentié et est combiné au signal de sortie ($c_1$(t)) du comparateur à fenêtre (13),
   b) la fréquence d'échantillonnage du signal vidéo binaire est supérieure ou égale à la fréquence d'échantillonnage de la caméra vidéo,
   c) la fonction d'autocorrélation est calculée à l'intérieur d'un environnement local, pour une multiplicité de points de base (lieux) du signal binaire et un maximum local (MAX) et/ou l'angle de direction associé (DIR) est déterminé au moyen d'une segmentation à partir des valeurs obtenues de l'autocorrélation.

2. Procédé selon la revendication 1, caractérisé en ce qu'une bascule bistable (19) prend en charge les signaux des flancs de commutation de la dérivée seconde (f''(t)) et exécute la combinaison.

3. Procédé selon la revendication 2, caractérisé en ce que la bascule bistable est une bascule bistable de type JK (19) et que les données du déclencheur de Schmitt (11) sont transférées avec les flancs produits et que la fréquence d'échantillonnage de l'image binaire est supérieure ou égale à la fréquence d'échantillonnage de la caméra vidéo (1).

4. Procédé selon la revendication 1, caractérisé en ce que pour l'autocorrélation on utilise un procédé d'accumulation selon lequel on prédétermine un contour enveloppant, de préférence un rectangle, à l'intérieur duquel s'effectue une accumulation dirigée.

5. Procédé selon la revendication 1, caractérisé en ce que pour la segmentation, on calcule l'autocorrélation pour huit vecteurs de déplacement, ces derniers étant choisis de telle sorte qu'ils correspondent au déplacement depuis le point central d'un environnement 5 x 5 en direction de points marginaux.

6. Procédé selon la revendication 1, caractérisé en ce que pour la détection de l'angle de rotation, une corrélation croisée des valeurs de mesure avec une courbe sinusoïdale est calculée et la position de phase et l'angle de rotation des structures parallèles sont déterminés à partir du maximum ainsi obtenu.

7. Procédé selon la revendication 4, caractérisé en ce que des zones possédant la même direction ou une direction voisine et une amplitude minimale sont réunies pour former des objets et le barycentre est déterminé pour des objets ayant une taille déterminée et des sections numériques parallèles à l'axe principal et perpendiculaires à la direction sont définies par le barycentre du rectangle circonscrit de l'objet et le nombre des pixels noirs et blancs est compté perpendiculairement aux axes principaux, pour la détermination de la répartition cumulée d'intensité le long de l'axe principal du code à barres.

8. Procédé selon la revendication 1, caractérisé en ce que le signal vidéo (f(t)) traverse un filtre passe-bas (8) avant la formation de la dérivée première (f'(t)).

9. Procédé selon la revendication 1, caractérisé en ce que le signal de sortie ($c_1$(t)) du comparateur à fenêtre (13) est transmis par l'intermédiaire d'un circuit de retardement (14) servant à compenser le temps de propagation, avec le temps de propagation $\tau_1$, et satisfait à la condition suivante :

$$c1(t) = \begin{cases} 0 & \text{pour } |\partial f(t)/\partial t| < S \\ 1 & \text{ailleurs} \end{cases}$$

avec
f(t) - signal vidéo, et
S - seuil programmable du comparateur à fenêtre 13.

10. Procédé selon la revendication 1, caractérisé en ce que pour l'examen de la dérivée seconde (f"(t)), le déclencheur de Schmitt (11) satisfait à la condition suivante :

$$c2(t) = \begin{cases} 0 & \text{pour } \partial_2(f(t)/\partial t^2 < -H \text{ SGN}[\partial_2 f(t-\tau_2)/\partial t^2] \\ 1 & \text{ailleurs} \end{cases}$$

avec
$\tau_2$ - temps de transit dans le déclencheur de Schmitt 11
SGN - signe
H - hystérésis programmable du déclencheur de Schmitt 11.

11. Procédé selon la revendication 1, caractérisé en ce qu'on utilise deux caméras vidéo, qui sont pivotées réciproquement de 90 degrés et sont commandées au moyen d'un multiplexeur.

12. Dispositif pour lire et identifier l'information d'un modèle de signe (image), notamment d'un code à barres, à l'intérieur d'un champ bidimensionnel ou tridimensionnel à l'aide d'une caméra vidéo (1) et d'un processeur binaire (3), qui produit un signal binaire (BIN) à partir du signal vidéo de l'image, et selon lequel le signal vidéo (f(t)) est différentié dans le temps et des flancs de commutation sont dérivés des points d'annulation de la dérivée seconde (f"(t)), flancs qui sont traités ultérieurement uniquement lorsque la valeur absolue du signal vidéo de la dérivée première (f'(t)) dépasse un seuil (A-A') pouvant être prédéterminé, caractérisé par les caractéristiques suivantes :

a) la dérivée première (f'(t)) est à la fois à nouveau différentiée et également envoyée à un comparateur à fenêtre (13) et les flancs de commutation de la dérivée (f"(t)) sont évalués au moyen d'un déclencheur de Schmitt (11), dont le signal de sortie ($c_2$(t)) est à nouveau différentié et est combiné au signal de sortie ($c_1$(t)) du comparateur à fenêtre (13),
b) la fréquence d'échantillonnage du signal vidéo binaire est supérieure ou égale à la fréquence d'échantillonnage de la caméra vidéo,
c) la fonction d'autocorrélation est calculée à l'intérieur d'un environnement local, pour une multiplicité de points de base (lieux) du signal binaire et un maximum local (MAX) et/ou l'angle de direction associé (DIR) est déterminé au moyen d'une segmentation à partir des valeurs obtenues de l'autocorrélation.

Fig. 1

Fig. 2

Fig. 3

Fig. 4

a

b

c

d

**Fig. 5**

**Fig. 6**

**Fig. 7**

**Fig. 8**

Akkumulation

**Fig. 9**

Klassifikation

**Fig. 10**